# EUROPÄISCHE PATENTSCHRIFT

(11) **EP 3 803 229 B1**
(45) Veröffentlichungstag und Bekanntmachung des Hinweises auf die Patenterteilung: **25.09.2024**
(21) Anmeldenummer: 19729731.0
(22) Anmeldetag: 06.06.2019
(51) Int. Cl.: F24S 25/13, H02S 20/23

(54) **MONTAGESYSTEM ZUR MONTAGE VON PHOTOVOLTAIKMODULEN AUF DÄCHERN, MIT BALLASTSTEINEN**
ASSEMBLY SYSTEM FOR ASSEMBLING PHOTOVOLTAIC MODULES ON ROOFS, COMPRISING BALLAST BLOCKS
SYSTÈME DE MONTAGE POUR MONTER DES MODULES PHOTOVOLTAÏQUES SUR DES TOITS, COMPRENANT DES PIERRES DE BALLAST

(30) Priorität: 08.06.2018 DE 202018103248 U
(43) Veröffentlichungstag der Anmeldung: 14.04.2021
(73) Patentinhaber: Premium Mounting Technologies GmbH & Co. KG, 95346 Stadtsteinach (DE)
(72) Erfinder: GRASS, Peter, 96317 Kronach (DE)
(74) Vertreter: Jannig & Repkow Patentanwälte PartG mbB
(86) Internationale Anmeldenummer: PCT/EP2019/064823
(87) Internationale Veröffentlichungsnummer: WO 2019/234174

(56) Entgegenhaltungen:
- EP-A1- 2 604 949
- DE-U1- 202012 000 203
- US-A1- 2003 010 374
- US-A1- 2010 205 877
- US-A1- 2017 070 188

## Beschreibung

Die vorliegende Erfindung betrifft eine Vorrichtung gemäß dem Oberbegriff des Patentanspruchs 1, das heißt ein Montagesystem zur Montage von Photovoltaikmodulen auf Dächern, insbesondere auf Flachdächern.

Photovoltaikmodule wandeln bekanntlich das Licht der Sonne direkt in elektrische Energie um. Es handelt sich im Allgemeinen um rechteckförmige Platten, die häufig auf Dächern von Gebäuden montiert sind.

Bekannte Montagesysteme zur Montage von Photovoltaikmodulen auf Dächern umfassen:
- direkt auf dem Dach oder einer darauf aufgelegten Schutzmatte anzuordnende Bodenschienen, die meistens durch Hohlkammerprofile aus Aluminium gebildet werden,
- auf den Bodenschienen montierbare Stützelemente, an welchen die Photovoltaikmodule und/oder sonstige Photovoltaikanlagen-Komponenten anbringbar sind, und
- Befestigungsvorrichtungen, beispielsweise in Form von Klemmen, zur Befestigung der Photovoltaikmodule und/oder sonstiger Photovoltaikanlagen-Komponenten an den Stützelementen.

Bei Bedarf können ferner quer zu den Bodenschienen verlaufende Querstreben, Kabelkanäle, Windschutzbleche, Ballaststeine, Ballaststoffwannen etc. vorgesehen werden.

Zumindest bei Flachdächern werden vorzugsweise unterschiedliche hohe Stützelemente verwendet, sodass die darauf angebrachten Photovoltaikmodule wunschgemäß gegenüber der Horizontalen geneigt und so besser zur Sonne ausgerichtet werden können.

So oder anders aufgebaute Photovoltaikanlagen sind vorzugsweise sogenannte aerodynamische Systeme. Das heißt dass diese Anlagen so ausgebildet und angeordnet sind, dass sie ohne eine Befestigung des Montagesystems am Dach und folglich ohne eine Beschädigung der Dachhaut oder der Dachaufbauten aufbaubar sind und selbst durch Unwetter nicht verschiebbar oder anhebbar sind. Ihre Lagesicherung erfolgt ausschließlich mittels deren Eigengewicht und zusätzlichem Ballast, falls dies erforderlich ist.

Als Ballast werden häufig Ballaststeine verwendet, die an ausgewählten Stellen auf bestimmte Montagesystem-Komponenten gelegt werden. Wie viele Ballaststeine verwendet werden, und wo jeder einzelne Ballaststein aufzulegen ist, ist von Photovoltaikanlage zu Photovoltaikanlage verschieden und wird normalerweise in Abhängigkeit von den individuellen Verhältnissen festgelegt.

Dabei kann es geschehen, dass einzelne Ballaststeine zwar optimal in Bezug auf die zu erreichende Lagesicherung positioniert sind, aber in anderer Hinsicht nicht optimal angeordnet sind. Eine nicht optimale Anordnung eines Ballaststeins liegt beispielsweise vor, wenn dieser seitlich weit über die ihn tragende Montagesystem-Komponente übersteht und die Gefahr besteht, dass er, aus welchem Grund auch immer von dort herunterfällt. Zur Vermeidung solcher Probleme könnte vorgesehen werden, den Ballaststein besser an die ihn tragende Montagesystem-Komponente anzupassen, beispielsweise Ballaststeine mit für den jeweiligen Einsatz optimierter Form zu verwenden. Dies ist jedoch mit einem großen Aufwand verbunden.

Weiterer Stand der Technik hierzu ist den Dokumenten US 2017/070188 A1, DE 20 2012 000203 U1 und EP 2 604 949 A1 entnehmbar.

Der vorliegenden Erfindung liegt daher die Aufgabe zugrunde, das Montagesystem gemäß dem Oberbegriff des Patentanspruchs 1 derart weiterzubilden, dass die Gefahr eines Herunterfallens von Ballaststeinen von der sie tragenden Montagesystem-Komponente reduzierbar ist.

Diese Aufgabe wird erfindungsgemäß durch das in Patentanspruch 1 beanspruchte Montagesystem gelöst.

Das erfindungsgemäße Montagesystem zeichnet sich dadurch aus, dass der Ballaststein durch eine am Montagesystem anbringbare Befestigungsvorrichtung in seiner bestimmungsgemäßen Position fixierbar ist.

Die durch die Befestigungsvorrichtung am Montagesystem fixierten Ballaststeine können auch unter ungünstigen Bedingungen nicht vom Montagesystem abfallen oder zur Seite kippen. Bei Verwendung einer geeigneten Befestigungsvorrichtung und von für die Anbringung der Befestigungsvorrichtung vorbereiteten Montagesystem-Komponenten lässt sich die Befestigungsvorrichtung mit vernachlässigbar geringem zusätzlichem Aufwand verarbeiten.

Vorteilhafte Weiterbildungen der Erfindung sind der folgenden Beschreibung, den Figuren, und den Unteransprüchen entnehmbar.

Die Erfindung wird nachfolgend anhand von Ausführungsbeispielen unter Bezugnahme auf die Figuren näher erläutert. Es zeigen
- Figur 1: eine perspektivische Ansicht einer Photovoltaikanlage mit einem im Folgenden näher beschriebenen Montagesystem,
- Figur 2: eine Seitenansicht der in der Figur 1 gezeigten Photovoltaikanlage,
- Figur 3: eine Draufsicht auf die in der Figuren 1 und 2 gezeigten Photovoltaikanlage,

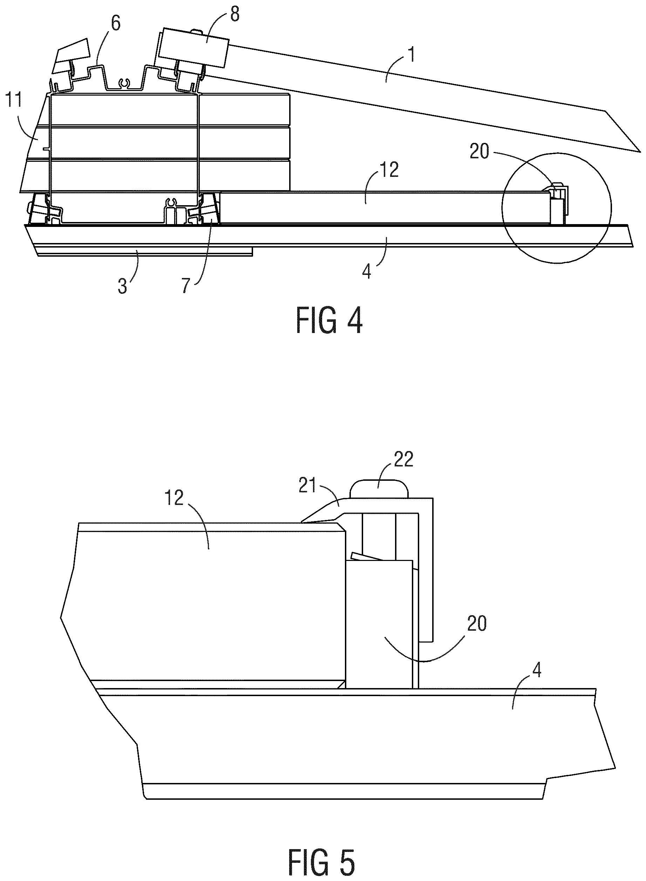

- Figur 4: eine vergrößerte Darstellung des in der Figur 2 eingekreisten Teils der Photovoltaikanlage, und
- Figur 5: eine vergrößerte Darstellung des in der Figur 4 eingekreisten Teils der Photovoltaikanlage.

Das im Folgenden näher beschriebene Montagesystem ist ein Montagesystem zur Montage von Photovoltaikmodulen auf Flachdächern. Das Montagesystem kann jedoch unverändert auch auf Dächern mit einer geringen Neigung bis beispielsweise 5° zum Einsatz kommen, und bei einer entsprechenden Anpassung an die gegebenen Verhältnisse sogar auch bei noch stärker geneigten Dächern.

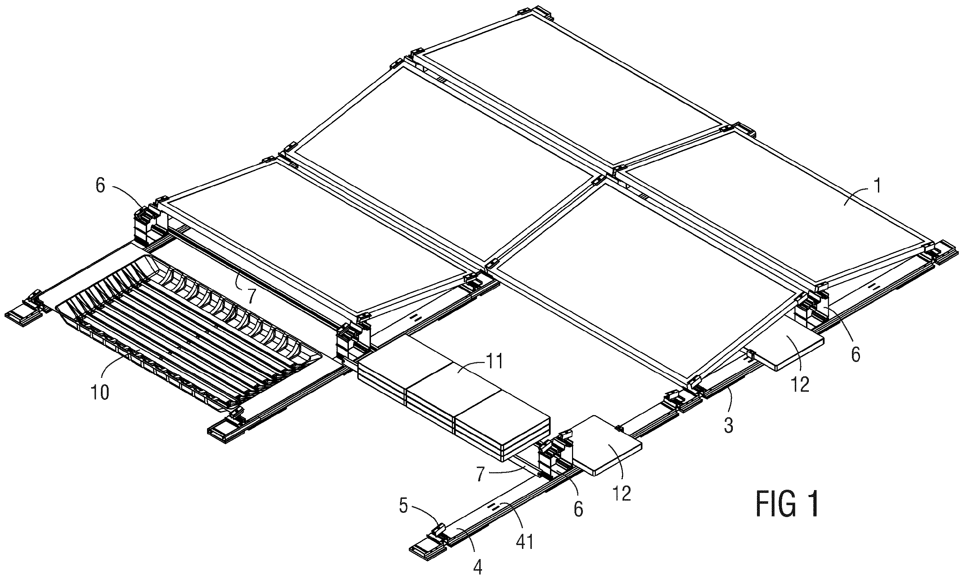

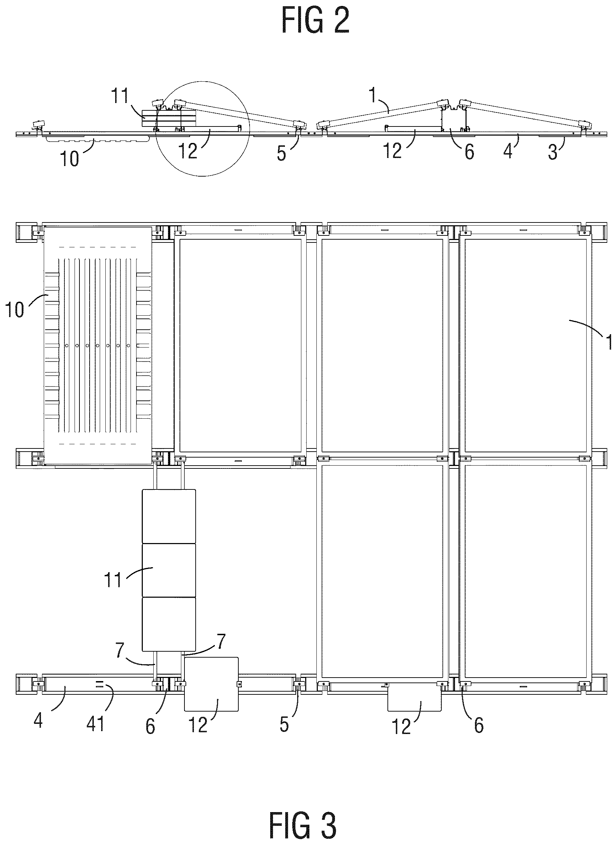

Die Figuren 1 bis 3 zeigen verschiedene Ansichten der kompletten Anlage. Die unter Verwendung des Montagesystems auf dem Dach zu montierenden Photovoltaik-Module sind in den Figuren mit dem Bezugszeichen 1 bezeichnet. Die Photovoltaikmodule 1 sind rechteckige Platten mit einem diese seitlich umlaufenden, beispielsweise aus Aluminium gefertigten Rahmen. Das die Photovoltaikmodule 1 tragende Montagesystem umfasst im gezeigten Beispiel eine auf das Dach aufgelegte Schutzmatte oder Schutzmatten-Streifen 3, mit der Schutzmatte 3 verklebte Bodenschienen 4, an den Bodenschienen 4 angebrachte erste (niedrige) Stützelemente 5 und zweite (hohe) Stützelemente 6, und an den zweiten Stützelementen 6 befestigte und rechtwinklig zu den Bodenschienen 4 verlaufende Querstreben 7.

Die Stützelemente 5, 6 dienen als Auflage für die Photovoltaikmodule 1. Die Photovoltaikmodule 1 werden durch Befestigungsvorrichtungen, beispielsweise durch Klemmen 8 an den Stützelementen 5, 6 befestigt. Durch die Verwendung von unterschiedlich hohen Stützelementen 5, 6 als Auflage für die Photovoltaikmodule 1 sind die Photovoltaikmodule gegenüber der Horizontalen geneigt und können so besser zur Sonne hin ausgerichtet werden.

Die Bodenschienen 4 werden durch Hohlkammerprofile gebildet.

Die Bodenschienen 4, die Stützelemente 5 und 6, und die Querstreben 7 bestehen im betrachteten Beispiel aus Aluminium, könnten aber auch aus einem anderen Metall oder einem sonstigen Material bestehen.

Die gezeigte Photovoltaikanlage ist ein sogenanntes aerodynamisches System. Das heißt es so ausgebildet und angeordnet ist, dass es ohne eine Befestigung des Montagesystems am Dach und folglich ohne eine Beschädigung der Dachhaut oder der Dachaufbauten aufbaubar ist und selbst durch Unwetter nicht verschiebbar oder anhebbar ist. Ihre Lagesicherung erfolgt ausschließlich mittels deren Eigengewicht und zusätzlichem Ballast.

Für die Ballastierung sind im betrachteten Beispiel
- eine zwischen benachbarte Bodenschienen 4 angeordnete und auf diese aufgelegte Ballaststoffwanne 10, welche mit beliebige Ballaststoffen wie Kies, großen Platten, Beton, etc. befüllbar ist,
- erste Ballaststeine 11, die auf zwei benachbarte, parallel zueinander verlaufenden Querstreben 7 aufgelegt sind, und
- zweite Ballaststeine 12, die jeweils auf eine Bodenschiene 4 aufgelegt sind,

vorgesehen, wobei die erwähnten Ballastierungsarten einzeln oder in beliebigen Kombinationen vorgesehen werden können.

Welche und wie viele der genannten Ballastierungsmittel zum Einsatz kommen, und wo diese anzuordnen sind, ist von Photovoltaikanlage zu Photovoltaikanlage verschieden und wird vorzugsweise in Abhängigkeit von den individuellen Verhältnissen und Bedürfnissen festgelegt.

Vorliegend interessieren von den genannten Montagesystem-Komponenten insbesondere die zweiten Ballaststeine 12. Jeder dieser Ballaststeine 12 ist durch eine am Montagesystem anbringbare Befestigungsvorrichtung 20 in seiner bestimmungsgemäßen Position fixierbar.

Die Befestigungsvorrichtung 20 ist im betrachteten Beispiel dazu ausgelegt, an der den Ballaststein 12 tragenden Montagesystem-Komponente angebracht zu werden. Dies muss aber nicht so sein. Die Befestigungsvorrichtung 20 kann prinzipiell auch an einer beliebigen anderen Montagesystem-Komponente angebracht werden.

Die Befestigungsvorrichtung 20 ist dazu ausgelegt, den Ballaststein 12 durch ein Niederdrücken des Ballaststeins gegen die den Ballaststein tragende Montagesystem-Komponente zu fixieren. Genauer gesagt weist die Befestigungsvorrichtung 20 einen seitlich überstehenden, über dem Ballaststein 12 zu liegen kommenden horizontalen Arm 21 auf, der durch Eindrehen einer Schraube 22 in die Befestigungsvorrichtung 20 auf die Oberseite des Ballaststeins 12 drückbar ist, wobei einhergehend damit der Rest der Befestigungsvorrichtung 20 nach oben zum Arm 21 hin gezogen wird, sodass also einhergehend mit dem durch das Niederdrücken des Arms 21 erfolgenden Fixieren des Ballaststeins 12 gleichzeitig eine Fixierung der Befestigungsvorrichtung 20 an der sie tragenden Montagesystem-Komponente erfolgt.

Die Montagesystem-Komponente, an welcher die Befestigungsvorrichtung 20 anzubringen ist, ist vorzugsweise zur Anbringung der Befestigungsvorrichtung an dieser speziell vorbereitet.

Diese Vorbereitung besteht im betrachteten Beispiel im Vorsehen von später noch genauer beschriebenen Schlitzen 41.

Im betrachteten Beispiel ist die Montagesystem-Komponente, an welcher die Befestigungsvorrichtung 20 anzubringen ist, so für die Anbringung vorbereitet, dass eine zur Fixierung des Photovoltaikmoduls 1 an den Stützelementen 5, 6 zum Einsatz kommende Befestigungsvorrichtung 8 als Befestigungsvorrichtung zur Fixierung des Ballaststeins an der sie tragenden Montagesystem-Komponente verwendbar ist. Dies ist ein großer Vorteil, muss aber nicht unbedingt so sein.

Die Befestigungsvorrichtung 20 ist vorliegend durch eine Rastverbindung mit der Montagesystem-Komponente verbindbar, an welcher die Befestigungsvorrichtung anzubringen ist. Genauer gesagt ist es so, dass an der Befestigungsvorrichtung 20 zwei in den Figuren nicht gezeigte Rasthaken vorgesehen sind, und an der Montagesystem-Komponente, an welcher die Befestigungsvorrichtung 20 anzubringen ist, mindestens ein Paar von parallelen Schlitzen 41 vorgesehen ist, wobei die Rasthaken und das Schlitzpaar 41 so ausgebildet und angeordnet sind, dass die Rasthaken in das Schlitzpaar einführbar sind und dahinter einrasten.

Dabei ist die Befestigungsvorrichtung 20 bis zur bestimmungsgemäßen Fixierung des Ballaststeins 12 durch die Befestigungsvorrichtung, also solange der Arm 21 noch nicht auf den Ballaststein 12 drückt, auch noch im eingerasteten Zustand längs des Schlitzpaares 41 verschiebbar, insbesondere bis zum Anschlag an den Ballaststein heranschiebbar.

Der Ballaststein ist im bestimmungsgemäß am Montagesystem fixierten Zustand so angeordnet, dass eine seiner Seitenflächen an die Befestigungsvorrichtung 20 anschlägt, und die gegenüberliegende Seitenfläche an eine andere Montagesystem-Komponente anschlägt. Bei dem in der Figur 1 gezeigten Beispiel schlägt einer der Ballaststeine 12 (der vordere Ballaststein 12) an eine am Stützelement 6 angebrachte Querstrebe 7 an, und der andere (hintere) Ballaststein 12 an einem Stützelement 6. Hierzu sei angemerkt, dass das Stützelement 6 und die Querstrebe 7 nicht wie im betrachteten Beispiel ausgebildet und angeordnet sein müssen, sondern auch einen beliebigen anderen Aufbau und eine beliebige andere Anordnung aufweisen können. Es könnte auch vorgesehen werden, dass der Ballaststein an eine beliebige andere Montagesystem-Komponente anschlägt.

Im betrachteten Beispiel ist die Befestigungsvorrichtung 20 dazu ausgelegt, einen auf eine der Bodenschienen 4 aufgelegten Ballaststein 12 daran zu fixieren. Durch die Befestigungsvorrichtung 20 kann aber auch ein auf eine beliebige andere Montagesystem-Komponente aufgelegter Ballaststein an der betreffenden Montagesystem-Komponente befestigt werden.

Es dürfte einleuchten und bedarf keiner näheren Erläuterung, dass das komplette Montagesystem, einschließlich des Ballaststeins und der zu dessen Fixierung vorgesehenen Befestigungsvorrichtung mannigfaltig modifizierbar sind. Dies betrifft sowohl die Ausbildung der einzelnen Teile als auch deren Anordnung.

Die beschriebene Ballaststein-Fixierung erweist sich unabhängig von den Einzelheiten der praktischen Realisierung als sehr vorteilhaft. Hierdurch kann mit einem vernachlässigbar geringen zusätzlichen Aufwand sichergestellt werden, dass der Ballaststein unter allen Umständen in seine bestimmungsgemäßen Position bleibt.

### Bezugszeichenliste

- 1: Photovoltaikmodul
- 3: Schutzmatte oder Schutzmatten-Streifen
- 4: Bodenschiene
- 5: erstes Stützelement (niedrig)
- 6: zweites Stützelement (hoch)
- 7: Querstrebe
- 8: Klemme zur Befestigung von 1 an 5, 6

- 10: Ballaststoffwanne
- 11: erste Ballaststeine
- 12: zweite Ballaststeine

- 20: Befestigungsvorrichtung füe 12
- 21: Arm von 20
- 22: Schraube an 20

- 41: Schlitze

## Patentansprüche

1. Montagesystem zur Montage von Photovoltaikmodulen (1) auf Dächern, insbesondere auf Flachdächern, mit
- direkt auf dem Dach oder einer darauf aufgelegten Schutzmatte (3) anzuordnenden, durch Hohlkammerprofile gebildeten Bodenschienen (4),
- auf den Bodenschienen montierbaren Stützelementen (5, 6), an welchen die Photovoltaikmodule und/oder sonstige Photovoltaikanlagen-Komponenten anbringbar sind, und
- mindestens einem auf das Montagesystem legbaren Ballaststein (12) zur Lagesicherung der Photovoltaikanlage auf dem Dach,
wobei der Ballaststein durch eine am Montagesystem anbringbare Befestigungsvorrichtung (20) in seiner bestimmungsgemäßen Position fixierbar ist
**dadurch gekennzeichnet, dass** die Befestigungsvorrichtung (20) einen seitlich überstehenden, über dem Ballaststein zu liegen kommenden horizontalen Arm (21) aufweist, der durch Eindrehen einer Schraube (22) in die Befestigungsvorrichtung auf die Oberseite des Ballaststeins (12) drückbar ist, wobei einhergehend damit der Rest der Befestigungsvorrichtung nach oben zum Arm hin gezogen wird, sodass also einhergehend mit dem durch das Niederdrücken des Arms erfolgenden Fixieren der Ballaststeins gleichzeitig eine Fixierung der Befestigungsvorrichtung an der sie tragenden Montagesystem-Komponente erfolgt.

2. Montagesystem nach Anspruch 1, **dadurch gekennzeichnet, dass** die Befestigungsvorrichtung (20) dazu ausgelegt ist, den Ballaststein (12) durch ein Niederdrücken des Ballaststeins gegen die den Ballaststein tragende Montagesystem-Komponente zu fixieren.

3. Montagesystem nach einem der vorhergehenden Ansprüche, **dadurch gekennzeichnet, dass** die Montagesystem-Komponente, an welcher die Befestigungsvorrichtung (20) anzubringen ist, zur Anbringung der Befestigungsvorrichtung an dieser speziell vorbereitet ist.

4. Montagesystem nach Anspruch 3, **dadurch gekennzeichnet, dass** die Montagesystem-Komponente, an welcher die Befestigungsvorrichtung (20) anzubringen ist, so für die Anbringung vorbereitet ist, dass eine zur Fixierung des Photovoltaikmoduls (1) an den Stützelementen (5, 6) zum Einsatz kommende Befestigungsvorrichtung (8) als Befestigungsvorrichtung (20) zur Fixierung des Ballaststeins (12) an der sie tragenden Montagesystem-Komponente verwendbar ist.

5. Montagesystem nach einem der vorhergehenden Ansprüche, **dadurch gekennzeichnet, dass** die Befestigungsvorrichtung (20) durch eine Rastverbindung mit der Montagesystem-Komponente verbindbar ist, an welcher die Befestigungsvorrichtung anzubringen ist.

6. Montagesystem nach Anspruch 5, **dadurch gekennzeichnet, dass** an der Befestigungsvorrichtung (20) zwei Rasthaken vorgesehen sind, und an der Montagesystem-Komponente, an welcher die Befestigungsvorrichtung anzubringen ist, mindestens ein Paar von parallelen Schlitzen (41) vorgesehen ist, wobei die Rasthaken und das Schlitzpaar so ausgebildet und angeordnet sind, dass die Rasthaken in das Schlitzpaar einführbar sind und dahinter einrasten.

7. Montagesystem nach Anspruch 6, **dadurch gekennzeichnet, dass** die Befestigungsvorrichtung (20) bis zur bestimmungsgemäßen Fixierung des Ballaststeins (12) durch die Befestigungsvorrichtung auch noch im eingerasteten Zustand längs des Schlitzpaares verschiebbar ist.

8. Montagesystem nach einem der vorhergehenden Ansprüche, **dadurch gekennzeichnet, dass** der Ballaststein (12) im bestimmungsgemäß am Montagesystem fixierten Zustand so angeordnet ist, dass eine seiner Seitenflächen an die Befestigungsvorrichtung (20) anschlägt, und die gegenüberliegende Seitenfläche an eine anderen Montagesystem-Komponente anschlägt.

9. Montagesystem nach Anspruch 8, **dadurch gekennzeichnet, dass** die andere Montagesystem-Komponente, an welche die gegenüberliegende Seitenfläche des Ballaststeins (12) anschlägt, eines der Stützelemente (5, 6) ist.

10. Montagesystem nach Anspruch 8, **dadurch gekennzeichnet, dass** die andere Montagesystem-Komponente, an welche die gegenüberliegende Seitenfläche des Ballaststeins (12) anschlägt, eine quer zu den Bodenschienen (4) verlaufende Querstrebe (7) ist.

11. Montagesystem nach einem der vorhergehenden Ansprüche, **dadurch gekennzeichnet, dass** die Befestigungsvorrichtung (20) dazu ausgelegt ist, einen auf eine der Bodenschienen (4) aufgelegten Ballaststein (12) daran zu fixieren.

## Claims

1. Mounting system for mounting photovoltaic modules (1) on roofs, in particular on flat roofs, having
- base rails (4) which are to be arranged directly on the roof or on a protective mat (3) placed thereon and which are formed by hollow-chamber profiles,
- support elements (5, 6) which can be mounted on the base rails and to which the photovoltaic modules and/or other photovoltaic installation components can be attached, and
- at least one ballast block (12) which can be placed on the mounting system and which serves for positionally securing the photovoltaic installation on the roof,
wherein the ballast block can be fixed in its intended position by a fastening device (20) which can be attached to the mounting system,
**characterized in that** the fastening device (20) has a laterally projecting horizontal arm (21) which comes to lie over the ballast block and which can be pressed onto the upper side of the ballast block (12) by screwing a screw (22) into the fastening device, with this being accompanied by the rest of the fastening device being pulled upwards towards the arm, with the result that the fixing of the ballast block that occurs by the arm pressing down is thus at the same time accompanied by fixing of the fastening device on the mounting system component that carries it.

2. Mounting system according to Claim 1, **characterized in that** the fastening device (20) is designed to fix the ballast block (12) by pressing down of the ballast block against the mounting system component that carries the ballast block.

3. Mounting system according to either of the preceding claims, **characterized in that** the mounting system component to which the fastening device (20) is to be attached is specially prepared for attaching the fastening device thereto.

4. Mounting system according to Claim 3, **characterized in that** the mounting system component to which the fastening device (20) is to be attached is prepared for the attachment in such a way that a fastening device (8) used for fixing the photovoltaic module (1) on the support elements (5, 6) can be used as the fastening device (20) for fixing the ballast block (12) on the mounting system component that carries it.

5. Mounting system according to one of the preceding claims, **characterized in that** the fastening device (20) can be connected by a latching connection to the mounting system component to which the fastening device is to be attached.

6. Mounting system according to Claim 5, **characterized in that** two latching hooks are provided on the fastening device (20), and at least one pair of parallel slots (41) is provided on the mounting system component to which the fastening device is to be attached, wherein the latching hooks and the slot pair are formed and arranged in such a way that the latching hooks can be inserted into and latch behind the slot pair.

7. Mounting system according to Claim 6, **characterized in that**, up until the ballast block (12) has been fixed as intended by the fastening device (20), the fastening device is displaceable along the slot pair even in the latched-in state.

8. Mounting system according to one of the preceding claims, **characterized in that**, in the state in which it is fixed as intended on the mounting system, the ballast block (12) is arranged in such a way that one of its side faces butts against the fastening device (20), and the opposite side face butts against another mounting system component.

9. Mounting system according to Claim 8, **characterized in that** the other mounting system component against which the opposite side face of the ballast block (12) butts is one of the support elements (5, 6).

10. Mounting system according to Claim 8, **characterized in that** the other mounting system component against which the opposite side face of the ballast block (12) butts is a transverse strut (7) extending transversely with respect to the base rails (4).

11. Mounting system according to one of the preceding claims, **characterized in that** the fastening device (20) is designed to fix a ballast block (12) placed on one of the base rails (4) thereon.

## Revendications

1. Système de montage destiné au montage de modules photovoltaïques (1) sur des toits, notamment sur des toits plats, ledit système voltaïque comprenant
- des rails de plancher formés par des profilés à chambres creuses (4) et destinés à être disposés directement sur le toit ou un tapis de protection (3) placé dessus,
- des éléments de support (5, 6) pouvant être montés sur les rails de plancher, auxquels les modules photovoltaïques et/ou d'autres composants du système photovoltaïque peuvent être fixés, et
- au moins une pierre de lestage (12) pouvant être posée sur le système de montage et destinée à sécuriser la position de l'installation photovoltaïque sur le toit,
la pierre de lestage pouvant être fixée dans sa position prévue par un dispositif de fixation (20) qui peut être fixé au système de montage,
**caractérisé en ce que** le dispositif de fixation (20) comporte un bras horizontal (21) qui fait saillie latéralement et qui se trouve au-dessus de la pierre de lestage et qui peut être pressé sur le côté supérieur de la pierre de lestage (12) par vissage d'une vis (22) dans le dispositif de fixation, le reste du dispositif de fixation étant conjointement tiré vers le haut en direction du bras, de façon à effectuer en même temps, conjointement à la fixation de la pierre de lestage effectuée par pression sur le bras, une fixation du dispositif de fixation au composant du système de montage qui le porte.

2. Système de montage selon la revendication 1, **caractérisé en ce que** le dispositif de fixation (20) est conçu pour fixer la pierre de lestage (12) par pression de la pierre de lestage contre le composant du système de montage qui porte la pierre de lestage.

3. Système de montage selon l'une des revendications précédentes, **caractérisé en ce que** le composant du système de montage auquel le dispositif de fixation (20) doit être fixé est spécialement préparé pour fixer le dispositif de fixation audit composant.

4. Système de montage selon la revendication 3, **caractérisé en ce que** le composant du système de montage auquel le dispositif de fixation (20) doit être fixé est préparé pour la fixation de telle sorte qu'un dispositif de fixation (8) utilisé pour fixer le module photovoltaïque (1) aux éléments de support (5, 6) serve de dispositif de fixation (20) destiné à fixer la pierre de lestage (12) à l'élément du système de montage qui la porte.

5. Système de montage selon l'une des revendications précédentes, **caractérisé en ce que** le dispositif de fixation (20) peut être relié par une liaison par encliquetage au composant du système de montage auquel le dispositif de fixation doit être fixé.

6. Système de montage selon la revendication 5, **caractérisé en ce que** deux crochets d'encliquetage sont prévus sur le dispositif de fixation (20) et au moins une paire de fentes parallèles (41) est prévue sur le composant du système de montage auquel le dispositif de fixation doit être fixé, les crochets d'encliquetage et la paire de fentes étant conçus et disposés de manière à ce que les crochets d'encliquetage puissent être insérés dans la paire de fentes et s'encliqueter derrière elles.

7. Système de montage selon la revendication 6, **caractérisé en ce que** le dispositif de fixation peut coulisser le long de la paire de fentes même à l'état encliqueté jusqu'à ce que la pierre de lestage (12) soit fixée comme prévu par le dispositif de fixation (20).

8. Système de montage selon l'une des revendications précédentes, **caractérisé en ce que** la pierre de lestage (12) est disposée comme prévu à l'état fixé au système de montage de telle sorte qu'une de ses surfaces latérales vienne en butée contre le dispositif de fixation (20) et que la surface latérale opposée vienne en butée contre un autre composant du système de montage.

9. Système de montage selon la revendication 8, **caractérisé en ce que** l'autre composant du système de montage, contre lequel la surface latérale opposée de la pierre de lestage (12) vient en butée, est l'un des éléments de support (5, 6).

10. Système de montage selon la revendication 8, **caractérisé en ce que** l'autre composant du système de montage, contre lequel la surface latérale opposée de la pierre de lestage (12) vient en butée, est une traverse (7) qui s'étend transversalement aux rails de plancher (4).

11. Système de montage selon l'une des revendications précédentes, **caractérisé en ce que** le dispositif de fixation (20) est conçu pour fixer une pierre de lestage (12), placée sur l'un des rails de plancher (4), à celui-ci.
